# EUROPÄISCHE PATENTSCHRIFT

(11) **EP 2 597 197 B1**
(45) Veröffentlichungstag und Bekanntmachung des Hinweises auf die Patenterteilung: **10.10.2018**
(21) Anmeldenummer: 12194133.0
(22) Anmeldetag: 23.11.2012
(51) Int. Cl.: E01F 9/627, E01F 15/14, F16F 1/373

(54) **Kombination aus einer Straßenausstattung und einem Dämpfungselement**
Combination of road equipment and attenuation element
Combination d'equipement de voirie et d'élément d'amortissement

(30) Priorität: 28.11.2011 DE 202011052134 U
(43) Veröffentlichungstag der Anmeldung: 29.05.2013
(73) Patentinhaber: Moravia GmbH, 65191 Wiesbaden (DE)
(72) Erfinder: Gaus, Olec, 32051 Herford (DE); Grass, Wolfgang, 55128 Mainz (DE)
(74) Vertreter: WSL Patentanwälte Partnerschaft mbB

(56) Entgegenhaltungen:
- DE-U1- 8 713 562
- DE-U1-202006 008 685
- GB-A- 2 451 469
- US-A- 5 468 093

## Beschreibung

Die vorliegende Erfindung betrifft eine Kombination aus einer Straßenausstattung und einem Dämpfungselement für eine Straßenausstattung, wobei das Dämpfungselement einen Grundkörper mit einer Oberseite, einer Unterseite und einer die Oberseite und Unterseite verbindende Mantelfläche aufweist, wobei das Dämpfungselement einstückig aus einem Elastomer ausgebildet und elastisch verformbar ist, wobei das Dämpfungselement mindestens zwei sich von der Oberseite des Grundkörpers aus erstreckende Randabschnitte aufweist, die jeweils eine Nut ausbilden, wobei die Öffnungen der Nuten zumindest abschnittsweise einander zugewandt sind, so dass eine Straßenausstattung zumindest abschnittsweise derart mit den Nuten in Eingriff bringbar ist, dass das Dämpfungselement an der Straßenausstattung befestigbar ist, wobei die Straßenausstattung eine Grundplatte aufweist, die abschnittsweise von der Nut der Randabschnitte gehalten wird.

Zum Schutz vor Beschädigungen durch versehentliches Anfahren werden auf oder neben öffentlichen oder privaten Verkehrswegen angebrachte Einrichtungen, wie beispielsweise Maschinen, Laderampen, Rollbahnen, Säulen, Leitungen, Rolltore, Brandschutztüren, Gebäudekanten, Kartenleser in Parkhäusern, etc., durch Anbringen sog. Schutzelemente, wie beispielsweise Rammpoller, Rammbügel und Rammgeländer, geschützt. Die Schutzelemente werden dabei derart um die zu schützende Einrichtung herum angeordnet, dass ein versehentliches Anfahren dieser Einrichtung, ohne dass vorher ein oder mehrere Schutzelemente angefahren werden, unmöglich ist. Damit die Schutzelemente durch ein versehentliches Anfahren nicht zerstört werden, weisen diese gelegentlich ein Dämpfungselement auf, welches eine elastische Verformung und daher ein zeitweiliges Ausweichen des Schutzelementes ermöglicht. Voraussetzung hierfür ist, dass die auf das Dämpfungselement einwirkende kinetische Energie bei einem versehentlichen Anfahren nicht die Widerstandsfähigkeit des Dämpfungselementes übersteigt, sodass im Idealfall weder das Fahrzeug noch das Schutzelement und schon gar nicht die zu schützende Einrichtung beschädigt wird.

Bisher werden als Dämpfungselemente Spiralfedern oder mehrteilige Systeme aus einem Gussring, einem Adapter, einem Schutzrohr und einem Elastomerkern verwendet. Derartige Dämpfungselemente sind jedoch nur mit einem entsprechend großen Arbeitsaufwand mit einer Straßenausstattung verbindbar, so dass auch die Montagekosten entsprechend hoch sind. Inder Regel muss ein derartiges Dämpfungselement zunächst aufwendig mit der jeweiligen Straßenausstattung verbunden werden, beispielsweise durch Verschweißen oder Verschrauben, bevor die Straßenausstattung oftmals mit Hilfe der Grundplatte, beispielsweise wiederum durch Verschrauben, auf einer Bodenfläche verankert werden kann.

Ähnliches gilt für die Herstellungskosten, die aufgrund der Mehrteiligkeit ebenfalls hoch sind.

Es existieren jedoch auch Dämpfungselemente auf der Basis von Luftpolstern. So offenbart die GB 2 451 469 A tragbare und temporäre Barrieren, die im Straßenverkehr dann zum Einsatz kommen, wenn Straßen repariert oder die Straßenführung verändert werden müssen. Insbesondere betrifft die Druckschrift eine Bodenplatte mit einem Dämpfungselement mit einer Vielzahl von Luftpolstern, wobei das Dämpfungselement über Kontaktflächen mit der Straße und der Barriere in Eingriff gebracht werden kann.

Wird als Dämpfungselement eine Spiralfeder oder ähnliches verwendet besteht außerdem die Gefahr, dass während einer Verformung Teile des anfahrenden Fahrzeuges in die Zwischenräume der Feder gelangen und so von der Feder eingeklemmt werden können. Ist die kinetische Energie beim Anfahren der Straßenausstattung zu groß, kann darüber hinaus eine Feder abreißen, wodurch scharfe Kantenabschnitte entstehen, die das anfahrende Fahrzeug erheblich beschädigen können.

Vor dem Hintergrund des beschriebenen Standes der Technik ist es daher Aufgabe der vorliegenden Erfindung, eine Kombination aus einer Straßenausstattung und einem Dämpfungselement bereitzustellen, welches mit einem geringen Herstellungsaufwand herstellbar und ohne zusätzliche Befestigungsmittel an einer Straßenausstattung befestigbar ist.

Die Aufgabe wird gelöst durch eine Kombination aus einer Straßenausstattung und einem Dämpfungselement mit den eingangs genannten Merkmalen, wobei die Kombination zumindest ein Befestigungsmittel umfasst, das abschnittsweise durch eine Durchbrechung des Grundkörpers und eine Durchbrechung der Grundplatte der Straßenausstattung hindurchführbar ist, wobei der Abschnitt des Befestigungsmittels, der sich im Betrieb der Vorrichtung innerhalb den Durchbrechungen befindet mit diesen ein Spiel aufweist und wobei das zumindest eine Befestigungsmittel auf einer Bodenfläche befestigbar ist.

In einem Querschnitt durch den Grundkörper weist dieser Materialfortsätze auf, die sich von der Oberseite des Grundkörpers aus als Randabschnitte erstrecken und mit der Oberseite des Grundkörpers eine Nut ausbilden. Die Nut ist in der Querschnittsansicht an drei Seiten geschlossen und weist an der vierten Seite eine Nutöffnung auf, die der Nutöffnung zumindest eines weiteren Randabschnitts zumindest abschnittsweise zugewandt ist. Mit den Nuten kann zumindest abschnittsweise die Straßenausstattung in Eingriff gebracht werden, so dass diese an dem Dämpfungselement befestigbar ist. Vorzugsweise sind die Randabschnitte dabei derart relativ zueinander angeordnet, dass die Nutöffnungen auf gegenüberliegenden Seiten des Grundkörpers angeordnet sind. Eine Relativbewegung zwischen dem Dämpfungselement und der mit den Nuten abschnittsweise in Eingriff gebrachten Straßenausstattung ist somit zumindest hinsichtlich zweier translatorischer Bewegungsrichtungen eingeschränkt.

Vorzugsweise sind das Material des Grundkörpers und die Nut derart dimensioniert, dass beim Anheben einer Straßenausstattung, das daran formschlüssig befestigte Dämpfungselement mit angehoben wird.

Wird das einstückige Dämpfungselement aus einem Kunststoff in einem Gussverfahren hergestellt, werden die Nuten der Randabschnitte durch Hinterschneidungen gebildet, die beim Herauslösen des Dämpfungselementes aus der Gussform entformt werden. Somit müssen weder die Nut noch die Randabschnitte nach dem Gießen in einem nachgelagerten Schritt bearbeitet werden, wodurch Material und Kosten beim Herstellungsprozess eingespart werden können.

Um das Lesen der vorliegenden Anmeldung zu vereinfachen werden hierin alle auf oder neben entsprechenden Verkehrswegen angeordneten Einrichtungen im Sinne der vorliegenden Erfindung als Straßenausstattung bezeichnet, wobei die Straßenausstattung eine zu schützende Einrichtung aber auch ein Schutzelement sein kann. So kann in einigen Fällen eine Straßenausstattung sowohl die Funktion einer zu schützenden Einrichtung als auch die Funktion eines Schutzelementes erfüllen. Als Beispiel hierfür sei an dieser Stelle ein Verkehrsschild genannt, welches an einer Stange montiert ist. Das Schild erfüllt dabei die Funktion der zu schützenden Einrichtung, während die Stange ausgestattet mit einem Dämpfungselement die Funktion eines Schutzelementes erfüllt, welches für den Fall eines versehentlichen Anfahrens eine reversible Verformung ermöglicht und so das Schild vor einer Beschädigung schützt.

Der Begriff Straßenausstattung beschränkt sich dabei nicht nur auf Einrichtungen oder Elemente die auf oder neben Straßen angeordnet sind, sondern umfasst alle Bauelemente die auf oder neben einem Verkehrsweg angeordnet sind und die versehentlich von einem Fahrzeug angefahren werden könnten. Insbesondere zählen hierzu auch Einrichtungen, die auf oder neben Verkehrswegen angeordnet sind, die sich auf Firmengeländen, in Industriehallen und/oder in Montagestätten befinden. Dabei ist der Begriff Fahrzeug sehr breit auszulegen und umfasst auch solche Fahrzeuge, die keinen eigenen Antrieb aufweisen, wie beispielsweise handbetriebene Flurförderfahrzeuge.

Im Gegensatz zu den herkömmlichen Dämpfungselementen ist es somit möglich, das erfindungsgemäße Dämpfungselement einstückig auszuführen und ohne weitere Befestigungsmittel an einer Straßenausstattung zu befestigen. Die Herstellungskosten können daher im Vergleich zu mehrteiligen Dämpfungselementen reduziert werden.

Die einfache Befestigungsmöglichkeit einer Straßenausstattung durch zumindest abschnittsweises in Eingriff bringen mit den Nuten der Randabschnitte des Dämpfungselementes ermöglicht darüber hinaus eine einfache Montage, so dass auch die Montagekosten gegenüber Systemen aus dem Stand der Technik reduziert werden können.

Ist die kinetische Energie bei einem versehentlichen Anfahren der Straßenausstattung höher als die Widerstandsfähigkeit des Dämpfungselementes, so entstehen bei der Zerstörung des Dämpfungselementes keine scharfen Ecken oder Kanten, die das anfahrende Fahrzeug beschädigen könnten, da der Grundkörper einstückig aus einem Elastomer hergestellt ist.

Insbesondere eignen sich elastische Schäume zur Herstellung des Dämpfungselementes. Dabei kann die Steifigkeit des Elastomers während dem Formungsprozess des Dämpfungselementes, insbesondere durch Einbringen von Gasblasen in einen Kunststoff, beeinflusst werden. Je mehr Gasblasen bei einem solchen Aufschäumprozess in den Kunststoff eingebracht werden, desto elastischer wird das Material.

In einer Ausführungsform ist vorgesehen, dass das Dämpfungselement zumindest drei, vorzugsweise zumindest vier, sich von der Oberseite des Grundkörpers aus erstreckende Randabschnitte aufweist. Die sich von der Oberseite des Grundköpers aus erstreckenden Randabschnitte bilden mit der Oberseite des Grundkörpers eine Nut aus, wobei die Nutöffnungen der Randabschnitte zumindest abschnittsweise einander zugewandt sind, sodass eine Straßenausstattung zumindest abschnittsweise derart mit den Nuten in Eingriff bringbar ist, dass das Dämpfungselement an der Straßenausstattung befestigbar ist.

Vorzugsweise sind die einzelnen Randabschnitte angrenzend an die Mantelfläche des Grundkörpers und möglichst gleichmäßig in Umfangsrichtung der Mantelfläche voneinander beabstandet angeordnet, sodass eine Relativbewegung zwischen dem Dämpfungselement und der daran befestigten Straßenausstattung zumindest hinsichtlich zweier translatorischer Bewegungsrichtungen weitestgehend verhindert wird und zumindest hinsichtlich einer weiteren translatorischen Bewegungsrichtung eingeschränkt ist.

Ist die Oberseite in einer Draufsicht rechteckig, so reichen vier paarweise auf gegenüberliegenden Seiten des Rechteckes angeordnete Randabschnitte aus, um eine Relativbewegung zwischen dem Dämpfungselement und einer mit den Nuten der Randabschnitte zumindest abschnittsweise in Eingriff gebrachten Straßenausstattung hinsichtlich aller translatorischen Freiheitsgrade einzuschränken. Für den Fall, dass die Oberseite des Grundkörpers in einer Draufsicht kreisförmig ausgestaltet ist, reichen drei, durch gleichmäßige Kreisbogenabschnitte voneinander beabstandete, auf dem Kreisumfang verteilte Randabschnitte aus, um alle translatorischen Relativbewegungen zwischen dem Dämpfungselement und der daran befestigten Straßenausstattung weitestgehend einzuschränken. Ist die Oberseite des Grundkörpers in einer Draufsicht dreieckig ausgestaltet gilt gleiches, wenn drei Randschnitte auf gegenüberliegenden Seiten des Dreiecks angeordnet sind.

In einer besonders bevorzugten Ausführungsform ist die Mehrzahl sich von der Oberseite des Grundkörpers aus erstreckenden Randabschnitte als ein zusammenhängender umlaufender Randabschnitt ausgebildet. Der umlaufende Randabschnitt grenzt vorzugsweise entlang dem gesamten Umfang des Grundkörpers an dessen Mantelfläche an und bildet mit der Oberseite des Grundkörpers eine Nut aus, deren Nutöffnung zumindest abschnittsweise einander zugewandt ist.

Eine Straßenausstattung, die beispielsweise eine Grundplatte aufweist, kann mit der Nut des umlaufenden Randabschnittes vorzugsweise formschlüssig in Eingriff gebracht werden, wobei die Straßenausstattung an dem Dämpfungselement befestigbar ist. Alle translatorischen Bewegungen zwischen dem Dämpfungselement und einer daran befestigten Straßenausstattung sind somit weitestgehend eingeschränkt.

In einer Ausführungsform ist der Übergang zwischen benachbarten Randabschnitten in einer Draufsicht auf die Oberseite des Grundkörpers auf der inneren, weiter von der Mantelfläche entfernt angeordneten Seite der Randabschnitte abgerundet. Ein abgerundeter Übergang verhindert, dass dieser durch ein Auseinanderziehen der Randabschnitte, beispielsweise beim abschnittsweisen Einbringen einer Grundplatte einer Straßenausstattung in die Nut der Randabschnitte, ein- oder ausreißt.

In einer Ausführungsform weist das Elastomer des Grundkörpers eine Shore-Härte von 30 bis 100, vorzugsweise von 40 bis 80 und besonders bevorzugt von 50 bis 70 auf. Da das Dämpfungselement einstückig aus einem Elastomer ausgebildet ist und somit sowohl der Grundkörper als auch die sich von der Oberseite des Grundkörpers erstreckenden Randabschnitte aus diesem Elastomer gefertigt sind und die Randabschnitte zur Befestigung des Dämpfungselementes an einer Straßenausstattung eine Nut aufweisen, ist es erforderlich die Shore-Härte derart auszuwählen, dass das Dämpfungselement elastisch verformbar und dennoch an der Straßenausstattung sicher befestigbar ist. Dieser Kompromiss zwischen der Elastizität einerseits und der Steifigkeit der Randabschnitte andererseits wird durch die angegebenen Shore-Härten erreicht. Die angegebenen Shore-Härten sind gemäß der DIN 53505 bestimmte Shore-A-Härten.

In einer weiteren Ausführungsform ist der Grundkörper des Dämpfungselementes derart elastisch verformbar, dass eine Flächennormale auf der Oberseite in einem verformten Zustand des Dämpfungselementes und die entsprechende Flächennormale auf der Oberseite des Dämpfungselementes in einem unverformten Zustand einen Winkel α ≤ 20°, vorzugsweise ≤ 15° und besonders bevorzugt ≤ 10° einschließen. Diese elastische Verformbarkeit gewährleistet, dass einerseits die Straßenausstattung durch eine Verformung des Dämpfungsmaterial geschützt wird und anderseits dem anfahrenden Fahrzeug so viel Widerstand entgegenbringt, dass der Anprall bemerkt wird oder das Fahrzeug bei geringen kinetischen Energien gestoppt werden kann, ohne dass das Fahrzeug und/oder die Straßenausstattung beschädigt werden.

In einer Ausführungsform sind die Oberseite und die Unterseite des Grundkörpers in einem unverformten Zustand parallel zueinander. Eine parallel zu der Unterseite verlaufende Oberseite ist vorteilhaft, da in diesem Fall eine Montage sowohl einer Straßenausstattung als auch des Dämpfungselementes besonders einfach ist. So können in einer Vielzahl von Anwendungen Straßenausstattungen, die einen senkrecht auf einer Grundplatte angeordneten Aufsatz aufweisen, derart auf einem Dämpfungselement montiert werden, dass nach der Montage der jeweilige Aufsatz senkrecht zu dem jeweiligen Dämpfungselement und senkrecht zu einer Bodenfläche ist. Dies kann besonders einfach durch ein Dämpfungselement mit einem Grundkörper erreicht werden, der zueinander parallele Ober- und Unterseiten aufweist.

In einer weiteren Ausführungsform ist der Grundkörper in einer Draufsicht auf dessen Oberseite rechteckig. Rechteckige Grundkörper lassen sich besonders leicht herstellen und können besonders gut parallel zu Kanten oder Seitenrändern angeordnet werden. In einer weiteren Ausführungsform ist der Grundkörper des Dämpfungselementes in einer Draufsicht auf dessen Oberseite kreisförmig ausgestaltet.

In einer weiteren Ausführungsform weist die Oberseite einen lichten Flächeninhalt von ≤ 22.400 mm², vorzugsweise ≤ 40.000 mm² und besonders bevorzugt ≤ 62.500 mm² auf, wobei die lichte Fläche vorzugsweise als Rechteck mit den Kantenlängen ≤ 140 mm und ≤ 160 mm, vorzugsweise jeweils ≤ 200 mm, besonders bevorzugt jeweils ≤ 250 mm ausgebildet ist. Dämpfungselemente mit rechteckig oder quadratisch ausgestalteten Oberseiten lassen sich leicht herstellen und können platzsparend auf oder neben Verkehrswegen montiert werden. Dabei ist das ausgewählte Flächenmaß ein Kompromiss zwischen der Elastizität des Dämpfungselementes und der benötigten Fläche, um einer Straßenausstattung den nötigen Halt zu geben.

Im Sinne der vorliegenden Erfindung bezeichnet die lichte Fläche, diejenige Fläche des Grundkörpers, die abschnittsweise mit einer Straßenausstattung in Eingriff bringbar ist. Im Fall eines Dämpfungselementes mit einem umlaufenden Randabschnitt entspricht die lichte Fläche, der Fläche, die von den abschnittsweise einander zugewandeten Hinterschnitten aufgespannt wird und die abschnittsweise mit einer Straßenausstattung in Eingriff bringbar ist.

In einer Ausführungsform weist der Grundkörper des Dämpfungselementes eine Mehrzahl von Durchbrechungen auf, vorzugweise vier Löcher, die sich von der Oberseite bis zur Unterseite erstrecken. Durch diese Durchbrechungen können Befestigungsmittel hindurchgeführt werden, mit denen die Straßenausstattung und das Dämpfungselement an einer Bodenfläche befestigbar ist.

Die Erfindung betrifft eine Kombination aus einem Dämpfungselement mit einem der zuvor beschriebenen Merkmale und einer Straßenausstattung, wobei die Straßenausstattung eine Grundplatte aufweist, die abschnittsweise von dem Hinterschnitt der Randabschnitte gehalten wird. Die Grundplatte der Straßenausstattung wird in den Hinterschnitt eingeführt, der von den sich von der Oberseite des Grundkörpers erstreckenden Randabschnitten und der Oberseite ausgebildet wird, sodass die Straßenausstattung an dem Dämpfungselement befestigbar ist. Die Straßenausstattung und das Dämpfungselement können so vormontiert und anschließend gemeinsam auf einer Bodenfläche befestigt werden.

Zu diesem Zweck umfasst die Kombination in einer Ausführungsform auch zumindest ein Befestigungsmittel, das abschnittsweise durch eine Durchbrechung des Grundkörpers und eine Durchbrechung in der Grundplatte einer Straßenausstattung hindurchführbar ist, wobei der im Betrieb der Vorrichtung innerhalb der Durchbrechungen befindliche Abschnitt des Befestigungsmittels und die Durchbrechungen ein Spiel aufweist und wobei das zumindest eine Befestigungsmittel mit einer Bodenfläche befestigbar ist.

Wirkt eine kinetische Energie auf eine erfindungsgemäße Kombination eines Dämpfungselementes, einer Straßenausstattung und zumindest eines Befestigungsmittels, gewährleistet das Spiel des sich innerhalb der Durchbrechungen befindlichen Abschnitts des Befestigungsmittels, dass das Befestigungsmittel durch die kinetische Energie nicht beschädigt wird. Das Dämpfungselement ist relativ zu der Bodenfläche auf der es montiert ist zumindest hinsichtlich translatorischer Bewegungsrichtungen im Rahmen des Spiels zwischen dem Befestigungsmittel und den Durchbrechungen bewegbar. Vorzugsweise ist das Befestigungsmittel ein Stahlseil, welches durch eine kinetische Energie verformbar ist und wodurch ein Aus- oder Abreißen des Befestigungsmittels verhindert wird. Besonders bevorzugt ist das zumindest eine Befestigungsmittel ein Bolzen oder eine Schraube, mit dem/der die Kombination auf einer Bodenfläche befestigbar ist. Die Verwendung anderer Befestigungsmittel ist hierdurch nicht ausgeschlossen.

In einer weiteren Ausführungsform weist der im Betrieb der Vorrichtung in der Durchbrechung befindliche Abschnitt des Befestigungsmittels einen maximalen Durchmesser auf, der ≤ 1/2 mal und bevorzugt ≤ 1/3 mal so groß ist wie der minimale Durchmesser der jeweiligen Durchbrechung des Grundkörpers. Einerseits soll die Kombination aus einem Dämpfungselement, einer Straßenausstattung und einem Befestigungsmittel ortsfest auf einer Bodenfläche befestigbar sein, andererseits soll das Befestigungsmittel durch das Einwirken einer kinetischen Energie möglichst wenig beschädigt werden, wofür sich die angegebenen Durchmesserverhältnisse als zweckdienlich erwiesen haben.

Weitere Vorteile, Merkmale und Anwendungsmöglichkeiten der vorliegenden Erfindung werden deutlich anhand der folgenden Beschreibung von bevorzugten Ausführungsformen und den dazugehörigen Figuren.

Es zeigen:
- Figur 1: eine schematische, teilweise weggebrochene Ansicht eines Dämpfungselemen-tes für eine erfindungsgemäße Kombination aus einer Straßenausstattung und einem Dämpfungselement;
- Figur 2a,b: eine schematische Schnittansicht durch eine erfindungsgemäße Kombination aus einem Dämpfungselement und einer Straßenausstattung mit a) dem Dämpfungselement in einem unverformten Zustand und b) dem Dämpfungselement in einem verformten Zustand;
- Figur 3: übereinandergelegte, schematische Querschnitte durch das Dämpfungselement gemäß Figur 2 in einem unverformten und einem verformten Zustand;
- Figur 4: eine schematische, perspektivische Ansicht einer weiteren Ausführungsform eines Dämpfungselementes für eine erfindungsgemäße Kombination aus einer Straßenausstattung und einem Dämpfungselement;
- Figur 5: einen schematischen Querschnitt durch eine erfindungsgemäße Kombination aus einem Dämpfungselement, einer Straßenausstattung und zumindest einem Befestigungsmittel gemäß der vorliegenden Erfindung.

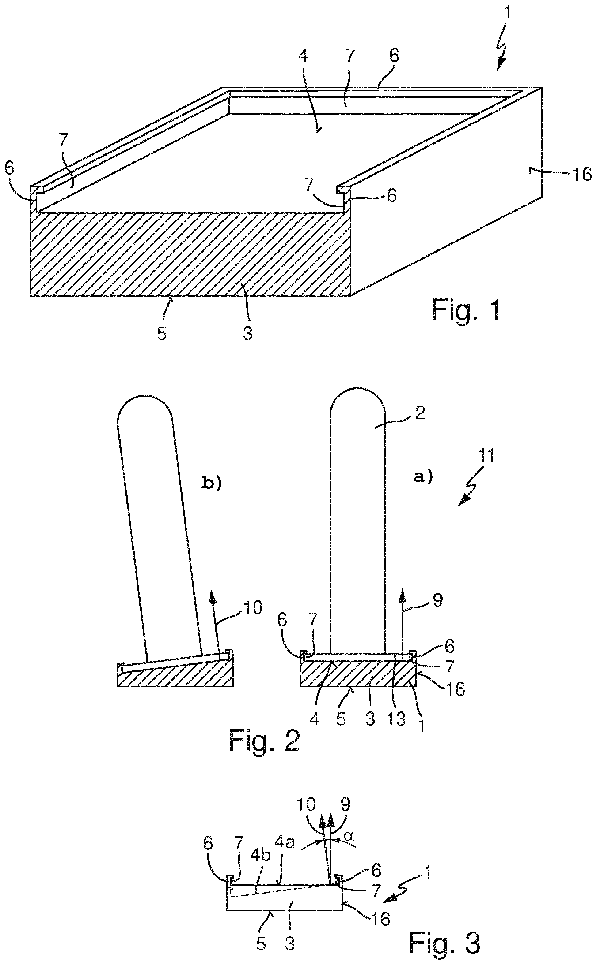

In Figur 1 ist eine teilweise weggebrochene Ansicht auf ein Dämpfungselement 1 für eine erfindungsgemäße Kombination einer Straßenausstattung und eines Dämpfungselementes gezeigt. In dieser Ausführungsform hat das Dämpfungselement 1 einen quaderförmigen Grundkörper 3, der eine Oberseite 4, eine Unterseite 5 und eine die Oberseite 4 und die
Unterseite 5 verbindende Mantelfläche 16 aufweist, wobei das Dämpfungselement 1 einstückig aus einem Elastomer ausgebildet und elastisch verformbar ist. Der weggebrochene, nicht dargestellte Teil des Dämpfungselementes 1 ist spiegelsymmetrisch zu der ihm gegenüberliegen Seite des Dämpfungselementes 1 ausgebildet.

Von der Oberseite 4 des Grundkörpers 3 aus erstrecken sich insgesamt vier Randabschnitte 6, die einen gemeinsamen, umlaufenden Rand 6 ausbilden, wobei der Rand 6 in Umfangsrichtung an die Mantelfläche 16 des Grundkörpers 3 angrenzt. Der umlaufende Rand 6 bildet mit der Oberseite 4 eine umlaufende Nut 7 aus, deren Nutöffnung abschnittsweise einander zugewandt ist. In einer Draufsicht auf die Oberseite 4 des quaderförmigen Grundkörper 3 ist diese rechteckig, so dass die einander zugewandeten Abschnitte der Nutöffnung auf gegenüberliegenden Seiten des Rechteckes angeordnet sind. Die Nut 7 ist derart dimensioniert, dass eine Straßenausstattung 2 (in der Figur 1 nicht gezeigt) mit der Nut 7 in Eingriff bringbar und das Dämpfungselement 1 somit an der Straßenausstattung 2 befestigbar ist.

Wirkt eine kinetische Energie auf das Dämpfungselement 1 so ist dieses, weil es einstückig aus einem Elastomer gefertigt ist, elastisch verformbar. Wird eine an einem derartigen Dämpfungselement 1 befestigte Straßenausstattung 2 von einem Fahrzeug angefahren, so kann durch die Verformbarkeit des Dämpfungselementes 1 eine Beschädigung des Fahrzeuges und/oder der Straßenausstattung 2 wirksam verhindert werden.

Eine Kombination 11 eines Dämpfungselementes 1 und einer Straßenausstattung 2 gemäß einer weiteren Ausführungsform der vorliegenden Erfindung ist in einer schematischen Schnittansicht in Figur 2 dargestellt. Das einstückig aus einem Elastomer ausgebildete Dämpfungselement 1 hat eine Oberseite 4, eine Unterseite 5 und eine die Oberseite 4 und die Unterseite 5 verbindende Mantelfläche 16 sowie einen Grundkörper 3. Von der Oberseite 4 aus erstrecken sich zwei Randabschnitte 6, die mit der Oberseite 4 eine Nut 7 ausbilden, wobei die Nutöffnungen der Randabschnitte 6 abschnittsweise einander zugewandt sind. Mit der Nut 7 ist eine Grundplatte 13 einer Straßenausstattung 2 - hier einem Straßenpoller - in Eingriff gebracht, sodass die Straßenausstattung 2 an dem Dämpfungselement 1 befestigt ist. Die Grundplatte 13 erstreckt sich abschnittsweise in die Nuten 7, sodass deren Bewegungsfreiheit gegenüber den Randabschnitten 6 und damit auch gegenüber dem Dämpfungselement 1 eingeschränkt ist. Insbesondere die Randabschnitte 6 verhindern, dass die Grundplatte 13 der Straßenausstattung 2 relativ zu der Oberseite 4 des Dämpfungselementes 1 bewegt werden kann.

Das verwendete Elastomer weist eine Shore-Härte von 50 bis 70 auf, sodass das Dämpfungselement 1 hinreichend elastisch verformbar ist und dennoch der Straßenausstattung 1 ausreichend Halt gibt. Beim Anheben der Straßenausstattung 2 kann das daran befestigte Dämpfungselement 1 mit angehoben werden, so dass eine einfache Montage der Kombination 11 möglich ist.

Gut in der Figur 2 erkennbar, zeigt diese die erfindungsgemäße Kombination 11 einmal mit einem Dämpfungselement 1 in einem unverformten Zustand (Figur 2a) und einmal mit einem Dämpfungselement 1 in einem verformten Zustand (Figur 2b).

In dem unverformten Zustand des Dämpfungselementes 1 ist die Oberseite 4 parallel zu der Oberseite 5 des Grundkörpers 3. Des Weiteren ist im unverformten Zustand auch die Grundplatte 13 parallel zu der Ober- und Unterseite 4, 5 des Grundkörpers 3.

Der Grundkörper 3 ist durch das Einwirken einer kinetischen Energie derart elastisch verformbar, dass eine Flächennormale 9 auf der Oberseite 4 in einem unverformten Zustand des Dämpfungselementes 1 und die entsprechende Flächennormale 10 auf der Oberseite 4 in einem verformten Zustand des Dämpfungselementes einen Winkel α ≤ 10° einschließt, wie es in der schematischen Überlagerung der zwei Querschnitte aus Figur 2 in Figur 3 gezeigt ist.

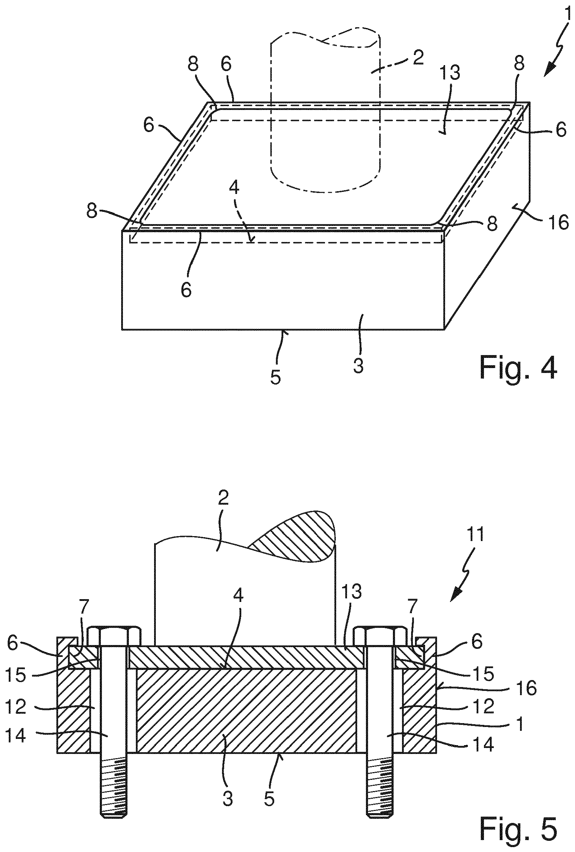

In Figur 4 ist eine perspektivische Ansicht einer weiteren Ausführungsform eines Dämpfungselementes 1 für eine erfindungsgemäße Kombination aus einer Straßenausstattung und einem Dämpfungselement der vorliegenden Erfindung dargestellt. Das Dämpfungselement 1 hat eine quaderförmige Form und ist einstückig aus einem Elastomer ausgebildet. Zur zumindest abschnittsweisen Aufnahme einer Straßenausstattung 2, die in der Figur 4 nur beispielhaft als gestrichelte Linie angedeutet ist, weist das Dämpfungselement 1 einen Grundkörper 3 mit einer Oberseite 4, einer Unterseite 5 und einer die Oberseite 4 und die Unterseite 5 verbindende Mantelfläche 16 auf. Von der Oberseite 4 aus erstrecken sich vier paarweise gegenüberliegend angeordnete Randabschnitte 6, die einen gemeinsamen, die Oberseite 4 einrahmenden Rand 6 bilden, der entlang des Umfangs des Grundkörpers 3 an dessen Mantelfläche 16 angrenzt und mit der Oberseite 4 eine Nut 7 ausbildet. Die Nutöffnung der Nut 7 des umlaufenden Randabschnittes 6 ist abschnittsweise einander zugewandt, sodass eine Straßenausstattung 2 durch abschnittsweises in Eingriff bringen mit der Nut 7 an dem Dämpfungselement 1 befestigbar ist. Hierzu kann beispielsweise eine Grundplatte 13 einer Straßenausstattung 2 abschnittsweise in die Nut 7 eingeführt werden. Nicht notwendigerweise, aber gleichwohl praktikabel ist die Grundplatte 13 rechteckig ausgeformt, sodass in einer Draufsicht auf die Oberseite 4 des Grundkörpers 3 die Ecken der Grundplatte 13 in den Ecken des umlaufenden Randabschnittes 6 angeordnet sind.

Die in den Ecken des Rechteckes angeordneten Übergänge zwischen aneinandergrenzenden Randabschnitten 6, das sind die benachbarten paarweise gegenüber angeordneten Randabschnitte 6, sind in einer Draufsicht auf die Oberseite 4 des Grundkörpers 3 auf der inneren, weiter von der Mantelfläche 16 entfernt angeordneten Seite der Randabschnitte 6 abgerundet. Durch die abgerundeten Übergänge wird verhindert, dass der Rand 6 beim auseinanderziehen benachbarter Randabschnitte 6 ein- oder ausreißt.

Eine Kombination 11 gemäß einer Ausführungsform der vorliegenden Erfindung ist in Figur 5 in einem Querschnitt gezeigt. Die Kombination umfasst ein Dämpfungselement 1, eine Straßenausstattung 2 und zumindest ein Befestigungsmittel 14. Gut erkennbar weist das Dämpfungselement 1 eine Oberseite 4, eine Unterseite 5 und eine die Oberseite 4 und die Unterseite 5 verbindende Mantelfläche 16 sowie einen Grundkörper 3 auf, wobei das Dämpfungselement 1 einstückig aus einem Elastomer hergestellt ist. Von der Oberseite 4 aus erstrecken sich zumindest zwei Randabschnitte 6, die an die Mantelfläche 16 angrenzen und mit der Oberseite 4 eine Nut 7 ausbilden. Die Nutöffnungen der Nuten 7 sind zumindest abschnittsweise einander zugewandt und derart ausgestaltet, dass eine Straßenausstattung 2 zumindest abschnittsweise mit den Nuten 7 in Eingriff bringbar ist und die Straßenausstattung 2 an dem Dämpfungselement 1 befestigbar ist. Zu diesem Zweck weist die Straßenausstattung 2 in dieser Ausführungsform eine Grundplatte 13 auf, die mit den Nuten 7 der Randabschnitte 6 abschnittsweise in Eingriff bringbar ist.

Darüber hinaus weist der Grundkörper 3 zumindest zwei Durchbrechungen 12 auf, die sich in Form von Löchern von der Oberseite 4 bis zu der Unterseite 5 erstrecken. Auch die Grundplatte 13 der Straßenausstattung 2 weist zumindest zwei Durchbrechungen 15, die in dieser Ausführungsform als Bohrungen ausgeführt sind, auf.

Im Berieb der Vorrichtung, d.h. in einem Zustand, in dem die Grundplatte 13 der Straßenausstattung 2 abschnittsweise mit den Nuten 7 der Randabschnitte 6 in Eingriff steht, sind die Bohrungen 15 der Grundplatte 13 und die Durchbrechungen 12 des Grundkörpers 3 konzentrisch zueinander angeordnet, sodass je ein Befestigungsmittel 14 durch ein Paar aus einer Durchbrechung 12 und einer Bohrung 15 der Grundplatte 13 hindurchgeführt werden kann. Der Durchmesser der Bohrungen 15 in der Grundplatte 13 muss nicht notwendigerweise dem Durchmesser der Durchbrechungen 12 des Grundkörpers 3 entsprechen. Bei dieser Ausführungsform ist der Durchmesser der Bohrungen 15 in der Grundplatte 13 kleiner als der Durchmesser der Durchbrechungen 12 des Grundkörpers 3.

Damit bei der Einwirkung einer kinetischen Energie auf die Kombination 11, die Befestigungsmittel 14 nicht durch etwaig auftretende Scherkräfte abgeschert werden, ist es von Vorteil, wenn die Abschnitte der Befestigungsmittel 14, die sich innerhalb der Durchbrechungen 12 des Grundkörpers 3 befinden ein Spiel aufweisen. Dabei ist der maximale Durchmesser der Abschnitte der Befestigungsmittel 14, die sich in den Durchbrechungen 12 des Grundkörpers 3 befinden halb so groß wie der minimale Durchmesser der Durchbrechungen 12 des Grundkörpers 3. Auch die Abschnitte der Befestigungsmittel 14 die sich innerhalb der Bohrungen 15 der Grundplatte 13 befinden weisen mit diesen ein Spiel auf, wobei der maximale Durchmesser der in den Bohrungen 15 der Grundplatte 13 befindlichen Abschnitte der Befestigungsmittel 14 dreimal kleiner ist als der minimale Durchmesser der Bohrungen 15 der Grundplatte 13.

### Bezuqszeichenliste

- 1: Dämpfungselement
- 2: Straßenausstattung
- 3: Grundkörper
- 4: Oberseite
- 5: Unterseite
- 6: Randabschnitt
- 7: Nut
- 8: abgerundeter Übergang
- 9: Flächennormale auf der Oberseite in einem unverformten Zustand des Dämpfungselementes
- 10: Flächennormale auf der Oberseite in einem verformten Zustand des Dämpfungselementes
- 11: Kombination
- 12: Durchbrechung des Grundkörpers
- 13: Grundplatte
- 14: Befestigungsmittel
- 15: Durchbrechung der Grundplatte
- 16: Mantelfläche
- α: Winkel zwischen der Flächennormale 9 und der Flächennormale 10

## Patentansprüche

1. Kombination (11) aus einer Straßenausstattung (2) und einem Dämpfungselement (1) für eine Straßenausstattung (2), wobei das Dämpfungselement einen Grundkörper (3), mit einer Oberseite (4), einer Unterseite (5) und einer die Oberseite (4) und die Unterseite (5) verbindende Mantelfläche (16) aufweist, wobei das Dämpfungselement (1) einstückig aus einem Elastomer ausgebildet und elastisch verformbar ist,
wobei das Dämpfungselement (1) mindestens zwei sich von der Oberseite (4) des Grundkörpers (3) aus erstreckende Randabschnitte (6) aufweist, die jeweils eine Nut (7) ausbilden, wobei die Öffnungen der Nuten (7) zumindest abschnittsweise einander zugewandt sind, so dass eine Straßenausstattung (2) zumindest abschnittsweise derart mit den Nuten in Eingriff bringbar ist, dass das Dämpfungselement (1) an der Straßenausstattung (2) befestigbar ist, wobei die Straßenausstattung (2) eine Grundplatte (13) aufweist, die abschnittsweise von der Nut (7) der Randabschnitte (6) gehalten wird,
**dadurch gekennzeichnet, dass** die Kombination (11) zumindest ein Befestigungsmittel (14) umfasst, das abschnittsweise durch eine Durchbrechung (12) des Grundkörpers (3) und eine Durchbrechung (15) der Grundplatte (13) der Straßenausstattung (2) hindurchführbar ist, wobei der Abschnitt des Befestigungsmittels (14), der sich im Betrieb der Vorrichtung innerhalb den Durchbrechungen (12, 15) befindet mit diesen ein Spiel aufweist und wobei das zumindest eine Befestigungsmittel (14) auf einer Bodenfläche befestigbar ist.

2. Kombination (11) nach Anspruch 1, **dadurch gekennzeichnet, dass** das Dämpfungselement (1) zumindest drei, vorzugsweise zumindest vier, sich von der Oberseite (4) aus erstreckende Randabschnitte (6) aufweist.

3. Kombination (11) nach Anspruch 1 oder 2, **dadurch gekennzeichnet, dass** die Mehrzahl sich von der Oberseite (4) des Grundkörpers (3) aus erstreckenden Randabschnitte (6) als ein umlaufender Randabschnitt (6) ausgebildet ist.

4. Kombination (11) nach einem der Ansprüche 1 bis 3, **dadurch gekennzeichnet, dass** der Übergang zwischen benachbarten Randabschnitten (6) in einer Draufsicht auf die Oberseite (4) des Grundkörpers (3) auf der inneren, weiter von der Mantelfläche (16) entfernt angeordneten Seite der Randabschnitte (6) abgerundet ist.

5. Kombination (11) nach einem der Ansprüche 1 bis 4, **dadurch gekennzeichnet, dass** das Elastomer des Grundkörpers (3) eine Shore-Härte von 30 bis 100, vorzugsweise von 40 bis 80 und besonders bevorzugt von 50 bis 70 aufweist.

6. Kombination (11) nach einem der Ansprüche 1 bis 5, **dadurch gekennzeichnet, dass** der Grundkörper (3) derart elastisch verformbar ist, dass eine Flächennormale (9) auf der Oberseite (4) in einem unverformten Zustand des Grundkörpers (3) und die entsprechende Flächennormale (10) auf der Oberseite (4) in einem verformten Zustand des Grundkörpers (3) einen Winkel (α) ≤ 20°, vorzugsweise ≤ 15° und besonders bevorzugt ≤ 10° einschließen.

7. Kombination (11) nach einem der Ansprüche 1 bis 6, **dadurch gekennzeichnet, dass** die Oberseite (4) und die Unterseite (5) des Grundkörpers (3) in einem nicht verformten Zustand parallel zueinander sind.

8. Kombination (11) nach einem der Ansprüche 1 bis 7, **dadurch gekennzeichnet, dass** der Grundkörper (3) in einer Draufsicht auf dessen Oberseite (4) rechteckig ist.

9. Kombination (11) nach einem der Ansprüche 1 bis 8, **dadurch gekennzeichnet, dass** die Oberseite (4) einen lichten Flächeninhalt ≤ 22400 mm², vorzugsweise ≤ 40000 mm² und besonders bevorzugt ≤ 62500 mm² aufweist, wobei die lichte Fläche vorzugsweise als Rechteck mit den Kantenlängen ≤ 140 mm und ≤ 160 mm, vorzugsweise jeweils ≤ 200 mm, besonders bevorzugt jeweils ≤ 250 mm, ausgebildet ist.

10. Kombination (11) nach einem der Ansprüche 1 bis 9, **dadurch gekennzeichnet, dass** der Grundkörper (3) eine zwischen der Oberseite (4) und der Unterseite (5) gemessene Höhe von ≤ 100 mm, vorzugsweise ≤ 60 mm und besonders bevorzugt ≤ 40 mm aufweist.

11. Kombination (11) nach einem der Ansprüche 1 bis 10, **dadurch gekennzeichnet, dass** der Grundkörper (3) eine Mehrzahl von Durchbrechungen (12), vorzugsweise vier Löcher, aufweist, die sich von der Oberseite (4) bis zur Unterseite (5) erstrecken.

12. Kombination (11) nach einem der Ansprüche 1 bis 11, **dadurch gekennzeichnet, dass** der in der Durchbrechung (12) des Grundkörpers (3) befindliche Abschnitt des Befestigungsmittels (12) einen maximalen Durchmesser aufweist der ≤ 1/2 mal und besonders bevorzugt ≤ 1/3 mal so groß ist wie der minimalen Durchmesser der jeweiligen Durchbrechung (12) des Grundkörpers (3).

## Claims

1. Combination (11) of a road equipment (2) and a damping element (1) for a road equipment (2), wherein the damping element comprises a base body (3) with an upper side (4), a bottom side (5) and a shell surface (16) connecting the upper side (4) and the bottom side (5), wherein the damping element (1) is integrally formed from an elastomer and is elastically deformable,
wherein the damping element (1) comprises at least two frame portions (6) extending from the upper side (4) of the base body (3), which each form a groove (7), wherein the openings of the grooves (7) face each other at least partially, such that a road equipment (2) can be engaged with the grooves at least partially in such a way that the damping element (1) is mountable to the road equipment (2), wherein the road equipment (2) comprises a base plate (13) which is partially held by the groove (7) of the frame portions (6),
**characterized in that** the combination (11) comprises at least one fastening element (14), which can partially be guided through an opening (12) of the base body (3) and an opening (15) of the base plate (13) of the road equipment (2), wherein the portion of the fastening element (14), which during operation of the device is located within the openings (12, 15), comprises a clearance therewith and wherein the at least one fastening element (14) is mountable to a floor space.

2. Combination (11) according to claim 1, **characterized in that** the damping element (1) comprises at least three, preferably at least four, frame portions (6) extending from the upper side (4).

3. Combination (11) according to claim 1 or 2, **characterized in that** the plurality of the frame portions (6) extending from the upper side (4) of the base body (3) are formed as a circumferential edge portion (6).

4. Combination (11) according to one of claims 1 to 3, **characterized in that** the transition between adjacent frame portions (6) is rounded in a top view onto the upper side (4) of the base body (3) at the inner side of the frame portions (6) being further away from the shell surface (16).

5. Combination (11) according to one of claims 1 to 4, **characterized in that** the elastomer of the base body (3) comprises a Shore hardness of 30 to 100, preferably from 40 to 80 and particularly preferably from 50 to 70.

6. Combination (11) according to one of claims 1 to 5, **characterized in that** the base body (3) is elastically deformable in such a way that a surface normal (9) on the upper side (4) in a non-deformed state of the base body (3) and the corresponding surface normal (10) on the upper side (4) in a deformed state of the base body (3) confine an angle (α) ≤ 20°, preferably ≤ 15° and particularly preferably ≤ 10°.

7. Combination (11) according to one of claims 1 to 6, **characterized in that** the upper side (4) and the bottom side (5) of the base body (3) are parallel to each other in a non-deformed state.

8. Combination (11) according to one of claims 1 to 7, **characterized in that** the base body (3) in a top view onto its upper side (4) is rectangular.

9. Combination (11) according to one of claims 1 to 8, **characterized in that** the upper side (4) comprises a surface area ≤ 22400 mm², preferably ≤ 40000 mm² and particularly preferably ≤ 62500 mm², wherein the surface area is preferably formed as a rectangle with edge lengths ≤ 140 mm and ≤ 160 mm, preferably ≤ 200 mm each, particularly preferably ≤ 250 mm each.

10. Combination (11) according to one of claims 1 to 9, **characterized in that** the base body (3) comprises a height measured between the upper side (4) and the bottom side (5) of ≤ 100 mm, preferably of ≤ 60 mm and particularly preferably of ≤ 40 mm.

11. Combination (11) according to one of claims 1 to 10, **characterized in that** the base body (3) comprises a plurality of openings (12), preferably four holes, which extend from the upper side (4) to the bottom side (5).

12. Combination (11) according to one of claims 1 to 11, **characterized in that** the section of the fastening element (12) being located in the opening (12) of the base body (3) has a maximum diameter which is ≤ 1/2 times and particularly preferably ≤ 1/3 times as large as the minimum diameter of the respective opening (12) of the base body (3).

## Revendications

1. Combinaison (11) d'un équipement de voirie (2) et d'un élément d'amortissement (1) pour un équipement de voirie (2), l'élément d'amortissement comprenant un corps de base (3) avec une face supérieure (4), une face inférieure (5) et une surface enveloppante (16) reliant la face supérieure (4) à la face inférieure (5), l'élément d'amortissement (1) étant réalisé en une seule pièce à partir d'un élastomère et étant élastiquement déformable,
l'élément d'amortissement (1) comprenant au moins deux zones de bord (6) s'étendant à partir de la face supérieure (4) du corps de base (3), qui forment chacune une rainure (7), les ouvertures des rainures (7) étant orientées, au moins par sections, l'une vers l'autre, si bien qu'un équipement de voirie (2) puisse être engagé, au moins par sections, dans les rainures (7) de façon telle que l'élément d'amortissement (1) puisse être fixé sur l'équipement de voirie (2), l'équipement de voirie (2) comprenant une plaque de base (13) qui est tenue, par sections, par la rainure (7) des zones de bord (6),
**caractérisée en ce que** la combinaison (11) comprend au moins un moyen de fixation (14) qui est adapté pour être passé, par sections, par un ajour (12) du corps de base (3) et un ajour (15) de la plaque de base (13) de l'équipement de voirie (2), la section du moyen de fixation (14) qui, en état d'utilisation du dispositif, se trouve à l'intérieur des ajours (12, 15), présentant avec ceux-ci un jeu et ledit au moins un moyen de fixation (14) étant adapté pour être fixé sur un sol.

2. Combinaison (11) selon la revendication 1, **caractérisée en ce que** l'élément d'amortissement (1) comprend au moins trois, de préférence au moins quatre, zones de bord (6) s'étendant à partir de la face supérieure (4).

3. Combinaison (11) selon la revendication 1 ou 2, **caractérisée en ce que** la pluralité de zones de bord (6) s'étendant à partir de la face supérieure (4) est formée comme une zone de bord périphérique (6).

4. Combinaison (11) selon l'une des revendications 1 à 3, **caractérisée en ce que** la transition entre des zones de bord (6) avoisinantes, vue en une vue de dessus sur la face supérieure (4) du corps de base (3), est arrondie sur le côté intérieur des zones de bord (6) qui est disposé à une distance de la surface enveloppante (16).

5. Combinaison (11) selon l'une des revendications 1 à 4, **caractérisée en ce que** l'élastomère du corps de base (3) présente une dureté Shore de 30 à 100, de préférence de 40 à 80 et de manière particulièrement préférée de 50 à 70.

6. Combinaison (11) selon l'une des revendications 1 à 5, **caractérisée en ce que** le corps de base (3) est élastiquement déformable d'une manière telle qu'une normale à a surface (9) sur la face supérieure (4) en l'état non déformé du corps de base (3) et la normale à la surface (10) correspondante sur la face supérieure (4) en un état déformé du corps de base (3), enferment entre elles un angle (α) ≤ 20°, de préférence ≤ 15° et de manière particulièrement préférée ≤ 10°.

7. Combinaison (11) selon l'une des revendications 1 à 6, **caractérisée en ce que** la face supérieure (4) et la face inférieure (5) du corps de base (3) sont parallèles l'une à l'autre dans un état non déformé.

8. Combinaison (11) selon l'une des revendications 1 à 7, **caractérisée en ce que**, en une vue de dessus sur la face supérieure du corps de base (3), celui-ci est rectangulaire.

9. Combinaison (11) selon l'une des revendications 1 à 8, **caractérisée en ce que** la face supérieure (4) présente une superficie intérieure ≤ 22400 mm², de préférence ≤ 40000 mm², de manière particulièrement préférée ≤ 62500 mm², la surface intérieure étant formé de préférence comme un rectangle avec des longueurs d'arête de ≤ 140 mm et ≤ 160 mm, de préférence ≤ 200 mm chacune, de manière particulièrement préférée ≤ 250 mm.

10. Combinaison (11) selon l'une des revendications 1 à 9, **caractérisée en ce que** le corps de base (3) présente une hauteur, mesurée entre la face supérieure (4) et la face inférieure (5), de ≤ 100 mm, de préférence de ≤ 60 mm et de manière particulièrement préférée de ≤ 40 mm.

11. Combinaison (11) selon l'une des revendications 1 à 10, **caractérisée en ce que** le corps de base (3) comprend une pluralité d'ajours (12), de préférence quatre trous, qui s'étendent de la face supérieure (4) à la face inférieure (5).

12. Combinaison (11) selon l'une des revendications 1 à 11, **caractérisée en ce que** la section du moyen de fixation (14) qui se trouve dans l'ajour (12) du corps de base (3), présente un diamètre maximal qui est ≤ ½ et de manière particulièrement préférée ≤ 1/3 du diamètre minimal de l'ajour respectif (12) du corps de base (3).
